Europäisches Patentamt

European Patent Office

Office européen des brevets

(11) Veröffentlichungsnummer: **0 024 545**
A2

(12) **EUROPÄISCHE PATENTANMELDUNG**

(21) Anmeldenummer: **80104305.0**

(22) Anmeldetag: **22.07.80**

(51) Int. Cl.³: **G 01 L 1/08**
**G 01 L 11/00, G 01 D 3/06**
**G 01 D 5/60**

(30) Priorität: **26.07.79 DE 2930356**

(43) Veröffentlichungstag der Anmeldung:
**11.03.81 Patentblatt 81/10**

(84) Benannte Vertragsstaaten:
**AT FR NL**

(71) Anmelder: **SIEMENS AKTIENGESELLSCHAFT Berlin und München**
**Postfach 22 02 61**
**D-8000 München 22(DE)**

(72) Erfinder: **Eschenbrenner, Bernhard, Ing. grad.**
**Bert-Brecht-Strasse 90**
**D-7500 Karlsruhe 21(DE)**

(54) Pneumatischer Kraftmessumformer.

(57) Die Erfindung bezieht sich auf einen pneumatischen Kraftmeßumformer mit einer zweiarmigen Kraftwaage, an deren einem Arm als Gegenkopplung über eine Zwischenhebelanordnung mit einstellbarem Angriffspunkt jeweils einer von zwei umschaltbaren, mit dem Ausgangsdruck des Meßumformers beaufschlagten Kompensationsbälgen angreift.

EP 0 024 545 A2

SIEMENS AKTIENGESELLSCHAFT      Unser Zeichen

Berlin und München      VPA 79 P 3 5 3 7

## Pneumatischer Kraftmeßumformer

Die Erfindung bezieht sich auf einen pneumatischen Kraftmeßumformer mit einer zweiarmigen Kraftwaage, an deren erstem Hebelarm die Meßkraft angreift und deren zweiter Hebelarm ein den Ausgangsdruck des Meßumformers steuerndes Düse-Prallplatte-System betätigt, und mit einem von dem Ausgangsdruck beaufschlagten Kompensationsbalg, der über einen Zwischenhebel mit Mitteln zur Änderung des Übersetzungsverhältnisses auf den zweiten Hebelarm der Kraftwaage wirkt.

Derartige pneumatische Meßumformer, die nach dem Prinzip des Kraftvergleichs arbeiten, sind bekannt. Die Meßspanne bzw. der Meßbereich läßt sich durch Änderung des Übersetzungsverhältnisses der Hebelarme etwa im Verhältnis 1 : 15 verändern.

Für viele Anwendungsfälle ist dies jedoch nicht ausreichend.

Um den Einstellbereich zu vergrößern, ist deshalb bei einer weiteren bekannten Ausführung eines Druckumformers

Sp 4 Scl / 24.07.1979

(DE-OS 26 58 143) auch auf der Eingangsseite der Kraftwaage eine Hebelanordnung mit Mitteln zur Verstellung
des Angriffspunkts der Meßkraft auf den ersten Hebelarm
vorgesehen. Die bekannte Hebelanordnung besteht aus einem Schwenkhebel, auf dem über eine Gewindespindel längs
seiner Oberseite eine Rolle mit umlaufender Schneide verschiebbar ist, die einerseits an dem Schwenkhebel und
andererseits an dem ersten Hebelarm anliegt.
Mit dieser doppelten Hebelanordnung läßt sich zwar eine
Meßspannenänderung im Verhältnis 1 : 50 erzielen, nachteilig ist jedoch der relativ hohe Fertigungs- und Justieraufwand bei einstellbaren Zwischenhebelanordnungen
sowohl auf der Eingangs- wie auf der Kompensationsseite
der Kraftwaage. Die eingangsseitige Hebelanordnung muß
zudem für volle Überlast ausgelegt sein.

Es besteht deshalb die Aufgabe, bei einem Kraftmeßumformer der eingangs genannten Art, Mittel vorzusehen, die
auf einfache Weise eine Erweiterung der Meßspanne ohne
zusätzlichen Justieraufwand ermöglichen.
Gelöst wird die Aufgabe mittels eines zweiten Kompensationsbalgs, der im gleichen Sinne wie der erste Kompensationsbalg, jedoch an einem anderen Punkt, auf den Zwischenhebel wirkt, sowie durch einen pneumatischen Umschalter, dessen Eingang mit dem Ausgang des Meßumformers und dessen einer Ausgang mit dem Eingang des ersten Kompensationsbalgs und dessen zweiter Ausgang mit
dem Eingang des zweiten Kompensationsbalgs verbunden ist.
Die bereits bekannte Einstellmöglichkeit der Meßspanne
über einen Zwischenhebel mit Mitteln zur Änderung des
Übersetzungsverhältnisses der Hebelarme der Kraftwaage
kann hier durch einfaches Umschalten von einem Kompensationsbalg auf den anderen zusätzlich variiert werden.
Die Kompensationsbälge sind am Zwischenhebel mit einem
Hebelarmlängenverhältnis zwischen 1 : 2 und 1 : 5 angekoppelt, so daß mit der bereits vorhandenen Einstellmöglichkeit mit einem Einstellverhältnis in der Größenordnung von 1 : 10 eine erhebliche Erweiterung der Meßspanne bis zu dem Verhältnis 1 : 50 erzielt werden kann.

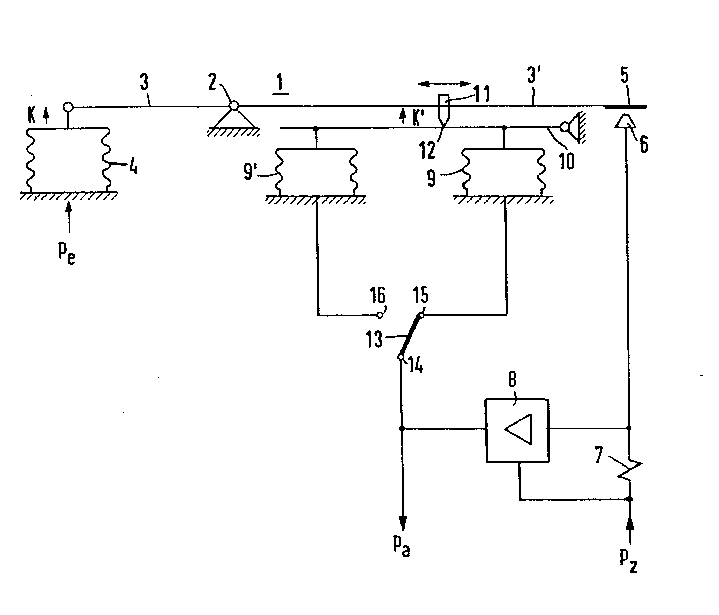

Zur Erläuterung der Erfindung ist in der Figur ein Ausführungsbeispiel schematisch dargestellt und im folgenden beschrieben.

Der dargestellte pneumatische Meßumformer arbeitet nach dem Kompensationsprinzip mit Kraft- bzw. Drehmomentenvergleich. Dazu dient eine Kraftwaage 1, die im Drehpunkt 2 gelagert ist und einen ersten Hebelarm 3 und einen zweiten Hebelarm 3' aufweist. Die auf den ersten Hebelarm 3 wirkende Meßkraft K wird durch die auf den zweiten Hebelarm 3' wirkende Kompensationskraft K' kompensiert. In dem gezeigten Ausführungsbeispiel wird die Meßkraft K mit Hilfe eines an den ersten Hebelarm 3 angekoppelten Faltenbalgs 4 erzeugt, der von einem die Meßgröße abbildenden Eingangsdruck $p_e$ beaufschlagt ist.

Das Ende des zweiten Hebelarms 3' ist als Prallplatte 5 ausgebildet, welche mit einer ihr gegenüberliegenden Düse 6 ein Düse-Prallplatte-System bildet, welches über eine Vordrossel 7 vom Zuluftdruck $p_z$ gespeist wird und den Eingangsdruck für einen pneumatischen Verstärker 8 liefert, dessen Ausgangsdruck der meßkraftproportionale Ausgangsdruck $p_a$ des Meßumformers ist. Zur Erzeugung der Kompensationskraft K' ist, wie bekannt, ein erster Kompensationsbalg 9 vorgesehen, der vom Ausgangsdruck $p_a$ beaufschlagt ist und an einem einarmigen Zwischenhebel 10 angreift. Zur Einstellung der Meßspanne etwa im Verhältnis 1 : 10 ist auf den zweiten Hebelarm 3' der Kraftwaage 1 ein parallel zu diesem verschiebbarer Reiter 11 angebracht, der mit einer schneidenartig ausgebildeten Kante 12 auf dem Zwischenhebel 10 aufliegt.

An einer anderen Stelle des Zwischenhebels 10 greift erfindungsgemäß ein zweiter Kompensationsbalg 9' an, wobei das Hebelarmlängenverhältnis der Angriffspunkte von erstem Kompensationsbalg 9 und zweitem Kompensationsbalg 9' je nach Bedarf zwischen 1 : 2 und 1 : 5 liegen kann.

Der den Ausgangsdruck $p_a$ des Meßumformers liefernde Ausgang des Verstärkers 8 ist mit dem Eingang 14 eines pneumatischen Umschalters 13 verbunden, dessen einer Ausgang 15 an den ersten Kompensationsbalg 9 und dessen zweiter Ausgang 16 an den zweiten Kompensationsbalg 9' angeschlossen ist.

Durch Betätigen des Umschalters wird der Meßbereich in einem festen Verhältnis umgeschaltet; die Zwischenwerte sind wie üblich, mit dem Reiter 11 einzustellen.

Patentansprüche

1. Pneumatischer Kraftmeßumformer mit einer zweiarmigen Kraftwaage, an deren erstem Hebelarm die Meßkraft angreift und deren zweiter Hebelarm ein den Ausgangsdruck des Meßumformers steuerndes Düse-Prallplatte-System betätigt, und mit einem von dem Ausgangsdruck beaufschlagten Kompensationsbalg, der über einen Zwischenhebel mit Mitteln zur Änderung des Übersetzungsverhältnisses auf den zweiten Hebelarm der Kraftwaage wirkt, g e k e n n - z e i c h n e t   d u r c h

a) einen zweiten Kompensationsbalg (9'), der im gleichen Sinne wie der erste Kompensationsbalg (9), jedoch an einem anderen Punkt, auf den Zwischenhebel (10) wirkt,

b) einen pneumatischen Umschalter (13), an dessen Eingang (14) der Ausgangsdruck ($p_a$) des Meßumformers liegt und dessen einer Ausgang (15) mit dem Eingang des ersten Kompensationsbalgs (9) und dessen zweiter Ausgang (16) mit dem Eingang des zweiten Kompensationsbalgs (9') verbunden ist.

2. Pneumatischer Kraftmeßumformer nach Anspruch 1, d a d u r c h   g e k e n n z e i c h n e t ,   daß die Kompensationsbälge (9, 9') am Zwischenhebel (10) mit einem Hebelarmlängenverhältnis zwischen 1 : 2 und 1 : 5 angreifen.

3. Pneumatischer Kraftmeßumformer nach Anspruch 1, d a d u r c h   g e k e n n z e i c h n e t ,   daß am zweiten Hebelarm (2') der Kraftwaage (1) ein parallel zu ihm verschiebbarer Reiter (11) angebracht ist, der mit einer schneidenartig ausgebildeten Kante (12) auf dem Zwischenhebel (10) aufliegt.